# FASCICULE DE BREVET EUROPEEN

(11) **EP 0 719 951 B1**
(45) Date de publication et mention de la délivrance du brevet: **28.03.2001**
(21) Numéro de dépôt: 95410152.3
(22) Date de dépôt: 27.12.1995
(51) Int. Cl.: F15C 5/00, H01F 7/08

(54) **Micro-électro aimant à circuit magnétique et bobine intégrés**
Mikro-Elektromagnet mit integrierten Magnetkreis und Spule
Micro electromagnet with integrated magnetic circuit and coil

(30) Priorité: 30.12.1994 FR 9416009
(43) Date de publication de la demande: 03.07.1996
(73) Titulaire: CROUZET Automatismes (Société Anonyme), F-25000 Valence (FR)
(72) Inventeur: Blind, Pascal, F-25000 Besançon (FR); Choujaa, Abdelkrim, F-39700 Fraisans (FR); Ngoagouni, Olivier, F-01270 Coligny (FR)
(74) Mandataire: de Beaumont, Michel

(56) Documents cités:
- WO-A-94/00696
- DE-A- 3 621 332
- US-A- 4 826 131
- JOURNAL OF MICROMECHANICS AND MICROENGINEERING, vol. 3, no. 2, Juin 1993 UK, pages 37-44, CHONG H AHN ET AL 'A planar micromachined spiral inductor for integrated magnetic microactuator applications'
- SENSORS AND ACTUATORS A , vol. A43, no. 1-3, Mai 1994 JAPAN, pages 11-16, F. CARDOT ET AL 'Fabrication of magnetic transducer composed of a high-density array of microelectromagnets with on-chip electronics'
- IEEE MICRO ELECTRO MECHANICAL SYSTEMS, 30 Janvier 1991 - 2 Février 1991 JAPAN, pages 27-32, B. WAGNER ET AL 'Microfabricated actuator with moving permanent magnet'

## Description

La présente invention concerne un microélectroaimant, ou actionneur électromagnétique. Elle s'applique plus particulièrement à la réalisation d'un tel actionneur en utilisant des technologies dérivées de celles développées dans le cadre de la fabrication de circuits intégrés.

Dans un actionneur électromagnétique, la création d'un champ magnétique au moyen d'une bobine provoque le déplacement d'un élément sensible à ce champ. Les actionneurs électromagnétiques s'appliquent notamment à des relais électriques, des capteurs de déplacement, des électrovannes, etc.

Dans le cas d'une électrovanne, l'actionneur est utilisé pour ouvrir ou fermer un passage de fluide au sein d'un corps de vanne. Dans des applications miniaturisées auxquelles se rapporte l'invention, l'actionneur agit généralement sur une membrane déformable formant clapet qu'il déplace pour obturer ou libérer un siège définissant un passage de fluide et formé, par exemple, dans une plaque de silicium.

Les microvannes électromagnétiques sont particulièrement intéressantes par rapport aux autres types de microvannes (électrostatiques, piézo-électriques, thermo-fluidiques, opto-fluidiques ou thermo-mécaniques) car elles associent un maximum de performances déterminantes pour une microvanne, à savoir la capacité de déformation de sa membrane, la force de son actionneur, sa consommation électrique, son besoin en tension d'alimentation, son temps de réponse.

Par contre, une microvanne électromagnétique est particulièrement complexe à réaliser en raison de la présence d'un électroaimant et, dans l'art antérieur, n'a jamais été réalisée de façon complètement intégrée.

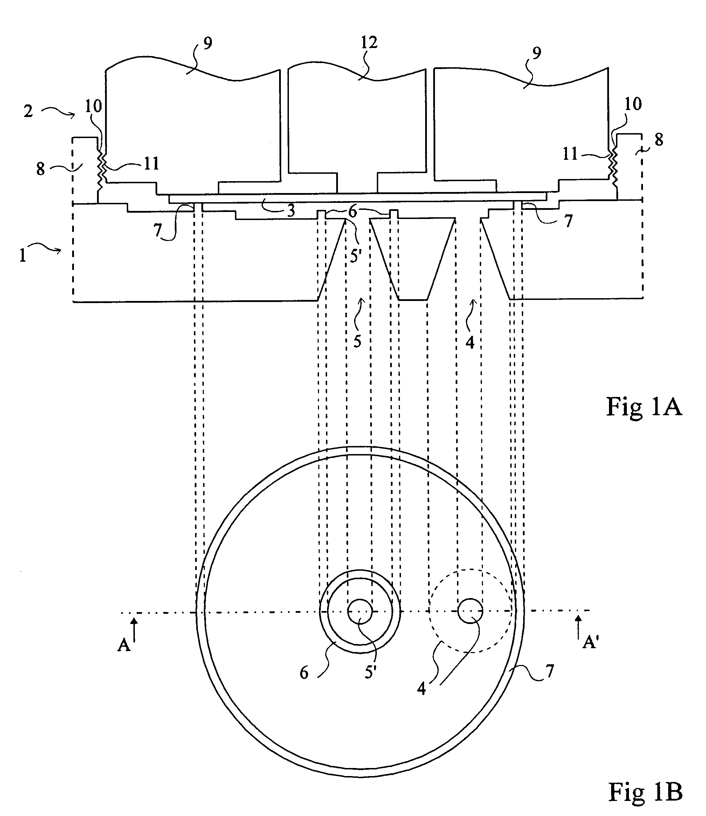

Les figures 1A et 1B représentent un exemple classique d'une microvanne électromagnétique dont le corps de vanne est réalisé en utilisant la technologie des circuits intégrés. La figure 1A est une vue en coupe transversale de la microvanne. La figure 1B est une vue partielle de dessus du corps de vanne. Le plan de coupe de la figure 1A est indiqué par un trait mixte A-A' à la figure 1B.

Une microvanne électromagnétique est classiquement constituée d'un corps de vanne 1, définissant des passages d'un fluide, et d'un actionneur électromagnétique 2 associé à une membrane 3 d'obturation d'un ou plusieurs de ces passages.

Le corps de vanne 1 est réalisé à partir d'une plaque, par exemple en silicium, gravée pour définir deux passages transversaux, respectivement d'entrée 4 et de sortie 5 du fluide. Un siège annulaire 6, destiné à coopérer avec la membrane 3, est également formé dans la plaque de silicium autour d'un orifice 5' du passage de sortie 5 qui débouche sensiblement au centre de la membrane circulaire. La membrane 3 repose sur un anneau périphérique 7 ménagé en saillie de la face du corps de vanne qui est en regard de la membrane.

L'actionneur électromagnétique 2 est rapporté sur le corps de vanne terminé, après positionnement de la membrane 3. Un anneau 8 de réception d'une bobine 9 est, par exemple, collé sur le corps de vanne 1. Cet anneau 8 est, dans l'exemple représenté, pourvu d'un taraudage interne 10 propre à coopérer avec un filetage externe 11 du solénoïde constitutif de la bobine 9. L'extrémité inférieure de la bobine repose sur la membrane 3, à l'aplomb de l'anneau 7 qui reçoit la périphérie de la membrane. La membrane 3 se trouve ainsi pincée, de manière étanche, entre l'anneau 7 et la bobine 9.

Un aimant permanent, ici un barreau cylindrique 12 constitué en un matériau à aimantation permanente, est logé librement dans le coeur de la bobine 9. L'aimant 12 constitue une partie mobile susceptible d'être déplacée axialement au moyen de la bobine 9.

Lorsque la bobine 9 est traversée par un courant, le champ magnétique qu'elle crée en son coeur provoque la descente du barreau 12 qui entraîne alors la membrane 3 jusqu'à ce qu'elle repose sur le siège 6. La vanne est alors fermée empêchant la circulation du fluide depuis le passage d'entrée 4 jusqu'au passage de sortie 5. Pour ouvrir la vanne, il suffit généralement de supprimer le champ magnétique en supprimant la polarisation de la bobine 9 pour que la pression sur la membrane, du fluide entrant dans la microvanne, permette la communication avec le passage de sortie 5.

Le document WO-A-94/00696 décrit une microvanne électromagnétique comprenant un ensemble mobile en matière plastique dans lequel peuvent être intégrées des particules magnétiques et un circuit magnétique constitué de parties en matériau ferromagnétique et d'un entrefer fermable par déplacement de l'ensemble mobile.

Un inconvénient des microvannes électromagnétiques classiques est que leur réalisation est complexe en raison du fait que la bobine et l'aimant permanent ne sont pas intégrés mais sont des éléments discrets qui sont rapportés sur le corps de vanne. En outre, cela interdit la mise en oeuvre d'un processus complet de fabrication collective tel que celui utilisé pour la réalisation du corps de vanne.

L'invention vise à pallier ces inconvénients en proposant un micro-actionneur électromagnétique dont tous les constituants sont réalisés en utilisant des technologies dérivées de celles développées dans le cadre de la fabrication de circuits intégrés. L'invention vise également à permettre une fabrication collective de microvannes électromagnétiques complètes en utilisant ces technologies.

Pour atteindre ces objets, la présente invention prévoit un micro-actionneur électromagnétique du type comportant une bobine de création d'un champ magnétique à action sur un ensemble mobile au moins partiellement constitué d'un matériau magnétique, et comportant un circuit magnétique de canalisation du flux magnétique au niveau d'un entrefer fermable par déplacement dudit ensemble mobile.

Selon un mode de réalisation de la présente invention, le micro-actionneur comporte une première plaque sur une première face de laquelle est formée ladite bobine et dans l'épaisseur de laquelle sont formées des portions transversales du circuit magnétique, une portion centrale définissant une extrémité fixe de l'entrefer.

Selon un mode de réalisation de la présente invention, le micro-actionneur comporte une deuxième plaque à partir de laquelle sont réalisés ledit ensemble mobile et des bras de suspension de cet ensemble mobile à des zones périphériques, l'ensemble mobile étant en regard de ladite portion centrale de la première plaque avec laquelle il définit l'entrefer, l'ensemble mobile et ses bras de suspension étant au moins partiellement en un matériau magnétique.

Selon un mode de réalisation de la présente invention, lesdits bras de suspension sont exclusivement en matériau magnétique.

Selon un mode de réalisation de la présente invention, ledit ensemble mobile est relié à ladite portion centrale de la première plaque par un circuit magnétique continu incluant les bras de suspension, les autres portions transversales de la première plaque et un capot magnétique reposant sur ladite première face de la première plaque.

Selon un mode de réalisation de la présente invention, ledit ensemble mobile constitue un clapet d'obturation d'au moins un passage d'un fluide pour constituer une microvanne électromagnétique.

Selon un mode de réalisation de la présente invention, ledit passage est constitué d'une ouverture transversale réalisée dans une troisième plaque et débouchant au droit dudit clapet.

Selon un mode de réalisation de la présente invention, le micro-actionneur comporte en outre une ouverture d'échappement débouchant dans ledit entrefer depuis ladite première plaque, ladite ouverture d'échappement étant propre à être obturée par ledit clapet.

L'invention concerne également un procédé de réalisation d'un micro-actionneur électromagnétique du type comportant une bobine de création d'un champ magnétique à action sur un ensemble mobile au moins partiellement constituée d'un matériau magnétique, qui comprend les étapes suivantes :
- creuser, à partir d'une première face d'une première plaque, trois évidements de définition de passages transversaux d'un circuit magnétique ; un évidement central présentant une profondeur inférieure à celle des deux autres évidements ;
- remplir lesdits évidements d'un matériau magnétique et former, sur ladite première face, une bobine par un enroulement plan de spires autour de l'évidement central ;
- graver la face opposée à ladite bobine de manière à rendre traversants lesdits remplissages des évidements en formant un épaulement autour et à distance dudit évidement central ;
- former, dans un matériau magnétique déposé sur une deuxième plaque et sur une surface équivalente à la surface dans laquelle s'inscrivent, dans la première plaque, lesdits remplissages de matériau magnétique, une zone centrale suspendue par des bras à une zone périphérique ;
- empiler lesdites plaques en alignant ledit remplissage central de la première plaque avec ladite zone centrale de la deuxième plaque, pour définir un entrefer dont une extrémité mobile est définie par ladite zone centrale de la deuxième plaque et dont une extrémité fixe est constituée par ledit remplissage central de la première plaque ; et
- rapporter, sur ladite première face de la première plaque, un capot magnétique faisant contact avec lesdits remplissages.

Selon un mode de réalisation de la présente invention, lesdites plaques sont en silicium et ledit matériau magnétique est un ferro-nickel.

Ces objets, caractéristiques et avantages, ainsi que d'autres de la présente invention seront exposés en détail dans la description suivante de modes de réalisation et de mise en oeuvre particuliers faite à titre non limitatif en relation avec les figures jointes parmi lesquelles :
les figures 1A et 1B qui ont été décrites précédemment sont destinées à exposer l'état de la technique et le problème posé ;
les figures 2A à 2C représentent, en coupes transversale et longitudinales, un mode de réalisation d'un micro-actionneur électromagnétique selon l'invention ;
les figures 3A à 3G illustrent des étapes d'un mode de mise en oeuvre du procédé de réalisation d'une première plaque constitutive d'un actionneur tel que représenté aux figures 2A à 2C ;
les figures 4A à 4G illustrent des étapes d'un mode de mise en oeuvre du procédé de réalisation d'une deuxième plaque constitutive d'un actionneur tel que représenté aux figures 2A à 2C ;
la figure 5 est une vue partielle en coupe transversale d'un mode de réalisation d'un capot magnétique d'un actionneur tel que représenté aux figures 2A à 2C ;
la figure 6 représente, en coupe transversale, un premier mode de réalisation d'une microvanne électromagnétique selon l'invention ;
la figure 7 illustre un mode de mise en oeuvre du procédé de réalisation d'une première plaque constitutive d'une microvanne électromagnétique telle que représentée à la figure 6 ;
la figure 8 illustre un mode de mise en oeuvre du procédé de réalisation d'une deuxième plaque constitutive d'une microvanne électromagnétique telle que représentée à la figure 6 ;
les figures 9A et 9B illustrent un mode de mise en oeuvre du procédé de réalisation d'une troisième plaque constitutive d'une microvanne électromagnétique telle que représentée à la figure 6 ;
la figure 10 est une vue en coupe transversale d'un mode de réalisation d'un capot magnétique d'une microvanne électromagnétique telle que représentée à la figure 6 ; et
la figure 11 représente, en coupe transversale, un deuxième mode de réalisation d'une microvanne électromagnétique selon l'invention.

Pour des raisons de clarté, les représentations des figures ne sont pas à l'échelle et les mêmes éléments ont été désignés aux différentes figures par les mêmes références.

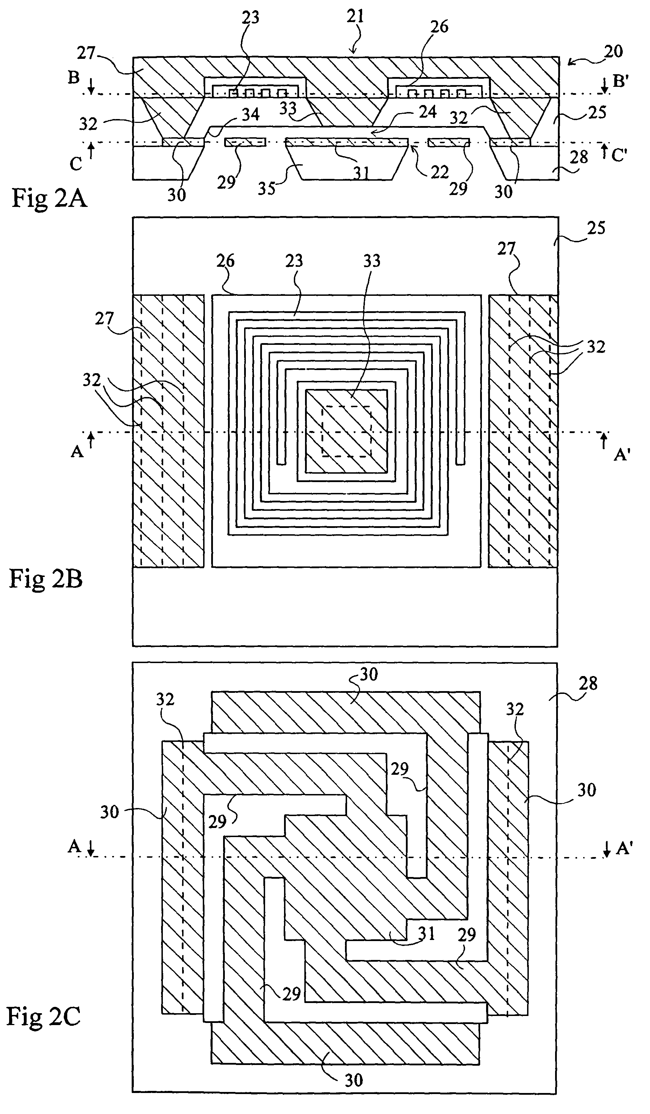

La figure 2A illustre, par une vue en coupe transversale, la structure d'un micro-électroaimant, ou actionneur électromagnétique, selon l'invention. La figure 2B est une coupe longitudinale vue de dessus, selon la ligne B-B' de la figure 2A. La figure 2C est une coupe longitudinale vue de dessous, selon la ligne C-C' de la figure 2A. Le plan de coupe transversal de la figure 2A est indiqué par les lignes A-A' aux figures 2B et 2C.

Comme le montre la figure 2A, un actionneur électromagnétique selon l'invention comporte un circuit magnétique 20 comprenant une partie fixe 21 et une partie mobile 22. Le circuit magnétique entoure une bobine 23 pour canaliser le flux magnétique vers un entrefer 24 que le circuit 20 comporte à l'aplomb du coeur de la bobine 23.

Une caractéristique de l'invention est qu'une première extrémité de l'entrefer 24 est définie par la partie mobile 22, ce qui le rend fermable sous l'action du champ magnétique.

La partie mobile 22 du circuit magnétique 20 et la bobine 23 sont, par exemple, réalisées à partir de plaques du type de celles utilisées pour former des substrats de circuits intégrés. Il s'agit par exemple de plaques de silicium.

La bobine 23 est, selon l'invention, réalisée par un enroulement plan (figure 2B) de préférence à tronçons rectilignes pour faciliter sa réalisation sur une première plaque 25, par exemple de silicium de préférence oxydé. La bobine est obtenue par un dépôt d'un matériau conducteur sur la plaque 25. Une couche d'isolement 26 protège électriquement la bobine 23 par rapport à un capot magnétique 27 fermant le circuit magnétique 20.

La partie mobile 22 du circuit magnétique 20 est obtenue par une couche à base d'un matériau magnétique doux, par exemple, un fer doux, un ferro-silicium, un ferro-cobalt ou un ferro-nickel. Ce matériau est choisi pour posséder une forte perméabilité (faible réluctance) et une faible rémanence de sorte que la partie mobile revienne dans sa position d'origine après coupure de l'alimentation de la bobine. Cette couche est formée sur une deuxième plaque 28, par exemple de silicium de préférence oxydé.

La plaque 28 est gravée selon un motif de définition de bras de suspension 29 partant de zones périphériques 30 vers une zone centrale 31 formant l'extrémité mobile de l'entrefer 24. Un ensemble mobile 35 est ainsi formé de la zone centrale 31 du circuit magnétique et d'une portion de silicium sur laquelle repose cette zone centrale.

La liaison entre le capot magnétique 27 et les zones périphériques 30 est réalisée par des portions transversales, ou remplissages 32 de passages traversants, formés dans la première plaque 25. Une seconde extrémité fixe de l'entrefer 24 est également formée d'une portion transversale, ou remplissage 33 d'un passage, traversant la plaque 25 dans la zone du coeur de la bobine 23. La plaque 25 présente, sur sa face en regard de la plaque 28, un épaulement 34 qui fixe la distance entre les deux extrémités de l'entrefer 24. Cet épaulement 34 autorise les déplacements de l'ensemble mobile 35 sous l'effet du champ magnétique.

Ainsi, tous les constituants de l'actionneur électromagnétique sont intégrés et peuvent être réalisés par un processus collectif sur des disques de silicium. Les disques sont assemblés après formation de tous les constituants des actionneurs qu'ils définissent puis découpés pour individualiser les actionneurs.

Selon une variante, les bras de suspension 29, les zones périphériques 30 et la zone centrale 31 sont réalisés à partir de plaques en un matériau magnétique doux. Il peut s'agir, par exemple, de plaques découpées, usinées ou photogravées de manière classique et étant dépourvues de substrat de silicium. Ici encore, on utilise un processus collectif de fabrication en rapportant ces plaques qui peuvent présenter la même forme que les disques de silicium constitutifs, par exemple, de la plaque 25 avant d'effectuer une découpe pour individualiser les actionneurs. Le cas échéant, les plaques en matériau magnétique peuvent être carrées et être positionnées de manière adéquate sur les disques de silicium.

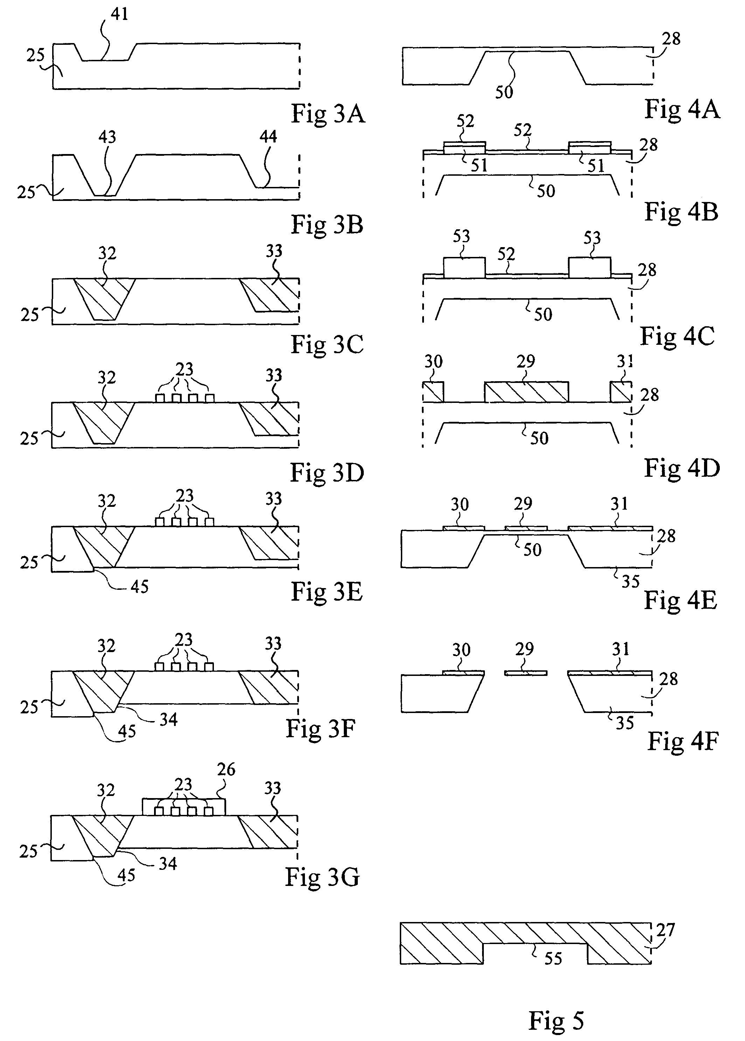

Les figures 3A à 3G, 4A à 4F et 5 illustrent un mode de mise en oeuvre du procédé selon l'invention permettant d'obtenir, à partir de disques de silicium, une structure d'actionneur telle que représentée aux figures 2A à 2C.

Les figures 3A à 3G représentent partiellement des coupes transversales de la plaque 25 supportant la bobine 23 à différentes étapes du procédé selon l'invention.

La plaque 25 subit, en premier lieu, une oxydation épaisse pleine plaque (non représentée) sur ses deux faces.

On réalise dans la première plaque 25 des ébauches 41 (figure 3A) de passages traversants destinés à recevoir les remplissages 32 de matériau magnétique. Les ébauches 41 sont réalisées par photolithogravure. Ces ébauches présentent une faible profondeur (par exemple environ 50 µm) qui correspond, comme on le verra par la suite, à la hauteur souhaitée pour l'entrefer 24.

On réalise alors, toujours par photolithogravure, une attaque profonde (figure 3B) pour obtenir des évidements, respectivement 43 et 44. La profondeur de ces évidements correspond à l'épaisseur souhaitée pour les remplissages, respectivement 32 et 33. L'attaque profonde est, par exemple, réalisée sur une profondeur de l'ordre de 270 µm, de sorte que les profondeurs des évidements 43 et 44 sont respectivement d'environ 320 µm et 270 µm.

Les gravures sont par exemple des gravures chimiques isotropes. L'angle d'attaque de ces gravures dans la plaque de silicium provient de la structure cristalline du silicium et présente un angle d'environ 54 degrés dans le cas d'une plaque dont le plan de coupe correspond à un plan (1, 0, 0).

Une fine couche conductrice (non représentée), par exemple de chrome, est déposée dans les évidements 43 et 44 à l'aide d'une couche d'élimination par soulèvement (non représentée) pour définir les zones de dépôt d'un matériau magnétique constituant les remplissages 32 et 33.

Le matériau magnétique doux, par exemple un ferro-nickel, est déposé par électroformage dans les évidements 43 et 44 et on obtient les remplissages 32 et 33 (figure 3C).

La bobine 23 (figure 3D) est alors réalisée d'une manière similaire à celle employée pour la réalisation des remplissages 32 et 33. En d'autres termes, on pulvérise une fine couche de chrome (non représentée) sur une couche de résine (non représentée) ouverte selon un motif de définition des tronçons de la bobine et constituant une couche d'élimination par soulèvement des résidus de chrome. La couche de chrome restante constitue une couche d'accrochage pour un matériau conducteur, par exemple du cuivre, déposé par électroformage dans un masque de résine (non représenté) dont l'épaisseur correspond au moins à l'épaisseur souhaitée pour les tronçons de la bobine 23.

On réalise ensuite des gravures successives depuis la face arrière de la plaque 25 (figures 3E et 3F) pour rendre les remplissages 32 et 33 traversants et permettre une liaison silicium/silicium entre les plaques 25 et 28.

Ces gravures se traduisent, en premier lieu, par la formation d'un épaulement 45 (figure 3E) qui rend les remplissages 32 traversants afin d'assurer la continuité du circuit magnétique à l'extérieur de la bobine 23 et qui permet une liaison silicium/silicium entre les plaques 25 et 28. La profondeur de l'épaulement 45 est choisie en fonction de l'épaisseur souhaitée pour la partie mobile du circuit magnétique et est, par exemple, d'environ 60 µm. Compte tenu des différents exemples de profondeurs de gravure indiqués dans ce qui précède, la plaque 25 peut présenter, à l'origine, une épaisseur, par exemple, de l'ordre de 380 µm.

En second lieu, on forme un épaulement 34 (figure 3F) destiné à rendre traversant le remplissage 33 dans la partie centrale de l'actionneur. La profondeur de cet épaulement 34 correspond à l'épaisseur choisie pour l'entrefer 24 et est, par exemple, d'environ 50 µm.

Une couche d'isolement 26 (figure 3G) est enfin déposée sur la bobine 23.

Les étapes du procédé selon l'invention qui ont été exposées ci-dessus peuvent être mises en oeuvre dans un ordre différent. Par exemple, la couche d'isolement 26 peut être formée sur la structure telle que représentée à la figure 3D, préalablement aux gravures de la face arrière de la plaque 25.

Les figures 4A à 4F représentent partiellement des coupes transversales de la plaque 28 supportant la partie mobile 22 du circuit magnétique 20 à différentes étapes du procédé selon l'invention. Pour des raisons de clarté, les figures 4B à 4D sont des agrandissements de la zone centrale représentée aux figures 4A et 4D à 4F où sont formés les bras de suspension 29.

La plaque 28 subit, en premier lieu, une oxydation épaisse pleine plaque (non représentée) sur ses deux faces.

On commence par pratiquer, depuis la face arrière de la plaque 28, une photolithogravure anisotrope pour définir des motifs 50 (figure 4A) dans lesquels s'inscrivent les bras de suspension 29 et les ouvertures qui les séparent des zones périphériques 30 et centrale 31. Cette gravure est arrêtée à une faible distance (par exemple de l'ordre de 20 µm) de la face avant de la plaque 28 destinée à supporter la partie mobile 22 du circuit magnétique 20. La portion de la plaque 28 qui subsiste sous la zone centrale 31 constitue avec cette dernière la masse mobile 35.

On définit ensuite le motif des ouvertures entre les bras de suspension 29 et les zones périphériques 30 et centrale 31 au moyen d'une couche de résine 51 (figure 4B) selon le motif souhaité. Cette couche de résine 51 sert de couche d'élimination par soulèvement d'une fine couche d'accrochage 52, par exemple de chrome 52, qui est alors déposée.

Après ouverture de la couche 52, on forme une couche de résine 53 (figure 4C) en suivant le motif des ouvertures pratiquées dans la couche 52. L'épaisseur de la couche de résine 53 est choisie pour être au moins égale à l'épaisseur souhaitée pour la partie mobile 22 du circuit magnétique 20.

On dépose alors, par électroformage, un matériau magnétique doux, par exemple un ferro-nickel, dans le motif défini par la couche de résine 53. L'épaisseur de ce dépôt qui définit la partie mobile 22 est, par exemple, d'environ 60 µm. Après élimination de la couche 53 (figures 4D et 4E), on obtient, dans le matériau magnétique, les bras de suspension 29, les zones périphériques 30 et la zone centrale 31.

Enfin, on réalise (figure 4F) une photolithogravure anisotrope de manière à éliminer la faible épaisseur résiduelle de la plaque 28 au droit des bras de suspension 29 et des ouvertures qui séparent ces bras des zones périphériques 30 et centrale 31.

Selon une variante non représentée, la gravure de la plaque 28 effectuée au cours de la première étape représentée à la figure 4A s'étend sous la zone centrale 31 de manière à ne laisser subsister de silicium, qu'en périphérie de la partie mobile 22.

La figure 5 illustre un exemple de la forme que peut prendre le capot magnétique 27 destiné à fermer le circuit magnétique 20 au-dessus de la bobine 23. Un tel capot, par exemple usiné à partir d'une plaque en un matériau magnétique doux, tel qu'un fer doux, un ferro-silicium, un ferro-cobalt ou un ferro-nickel, peut être simplement évidé pour présenter une saignée 55 de réception de la bobine 23 qui fait saillie de la plaque 25.

Une fois les deux plaques 25 et 28 et le capot 27 réalisés, on les assemble par exemple par soudure ou par collage. La partie mobile 22 du circuit magnétique est engagée dans le volume défini par l'épaulement 45 de la plaque 25, de sorte que le silicium de la plaque 25 porte sur le silicium de la plaque 28 hors du circuit magnétique. Cela permet d'effectuer une soudure plus facile par contact silicium sur silicium. Une technique similaire peut être appliquée au capot magnétique 27 en réalisant ce dernier sur une plaque de silicium dans laquelle est formée une structure telle que représentée à la figure 5. Dans ce cas, la face externe du capot est constituée de silicium et les remplissages de matériau magnétique s'arrêtent en périphérie, par exemple au droit des remplissages 32 de la plaque 25.

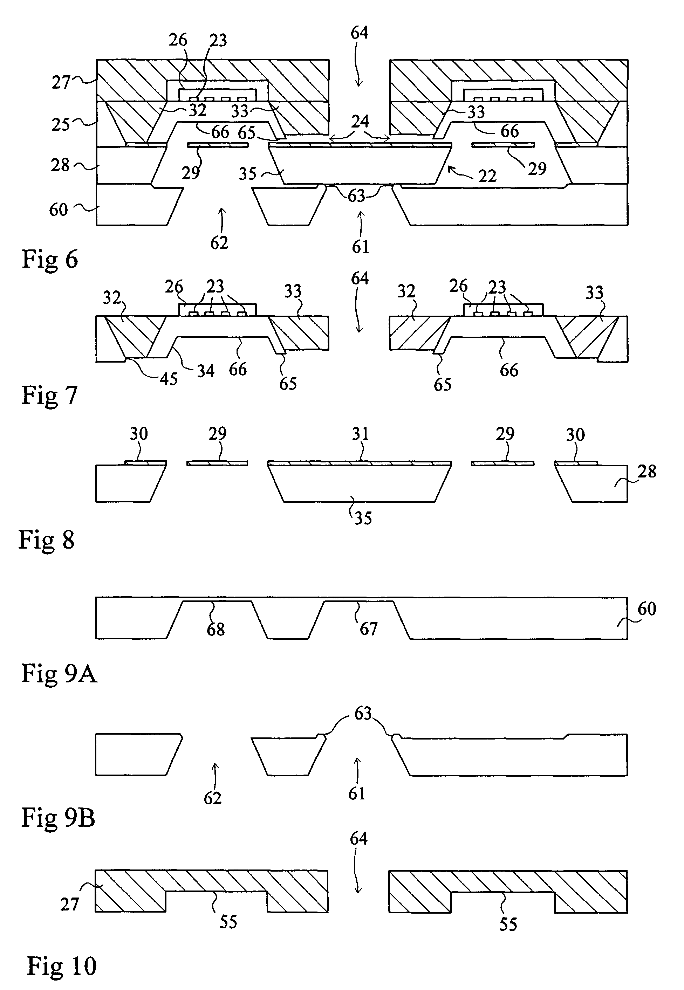

Les figures 6 à 10 illustrent, par des vues en coupe transversale, un mode de réalisation d'une microvanne électromagnétique selon l'invention dans laquelle l'actionneur est constitué d'une structure du type de celle représentée aux figures précédentes. La figure 6 représente une microvanne assemblée selon l'invention. Les figures 7, 8 et 10 représentent les structures des plaques, respectivement 25 et 28, et du capot magnétique 27 de l'actionneur dont est équipée la microvanne représentée à la figure 6. Les figures 9A et 9B représentent une troisième plaque, constituant un corps de vanne, à différentes étapes d'un mode de mise en oeuvre du procédé selon l'invention.

Dans la description qui suit d'une microvanne selon l'invention, on se bornera à exposer les modifications apportées par rapport à la structure de l'actionneur tel que représenté aux figures 2A à 2C.

Une microvanne telle que représentée à la figure 6 comporte une troisième plaque 60, par exemple de silicium, constituant le corps de vanne. Cette plaque 60 comporte deux ouvertures transversales, par exemple d'entrée 61 et de sortie 62 d'un fluide auquel est destinée la microvanne. L'ouverture 61 débouche dans la face arrière de l'ensemble mobile 35 qui constitue un clapet d'obturation de l'ouverture 61. L'ouverture 62 débouche au droit d'un bras de suspension 29 de l'actionneur. De préférence, un siège 63, destiné à coopérer avec le clapet 35, est formé en périphérie de cette ouverture 61.

La première plaque 25 comporte, dans le remplissage 33, une ouverture transversale 64 constituant un conduit d'échappement de la microvanne. Cette ouverture 64 se poursuit dans le capot magnétique 27 pour déboucher de l'actionneur dans sa face supérieure.

La première plaque 25 est légèrement modifiée pour présenter, en périphérie de la zone centrale 33, un siège 65 (figure 7) destiné à coopérer avec la périphérie de la zone centrale 31, afin d'assurer l'étanchéité entre l'ouverture 64 et le corps de vanne lorsque l'entrefer 24 est en position fermée. Ce siège 65 peut être associé à un évidement 66 du silicium de la plaque 25, à l'aplomb des bras de suspension 29, pour favoriser l'échappement entre les ouvertures 62 et 64 lorsque l'entrefer 24 est ouvert (position représentée à la figure 6).

La formation du siège 65 et de l'évidement 66 peut être effectuée au moment où l'on réalise l'épaulement 34 (voir figure 3F).

La deuxième plaque 28 (figure 8) est quant à elle d'une structure identique à celle représentée à la figure 4F. On s'assure simplement, ici, de conserver une zone centrale de silicium à l'aplomb de la zone centrale 31 pour jouer le rôle de clapet 35 de l'ouverture 61 ménagée dans la plaque 60.

La plaque 60 constituant le corps de vanne est, par exemple, tout d'abord gravée de manière anisotrope depuis la face arrière selon un motif de définition d'ébauches profondes 67 et 68 (figure 9A) des ouvertures, respectivement 61 et 62. L'épaisseur de silicium qui subsiste après cette gravure est choisie pour correspondre à la hauteur souhaitée pour le siège 63.

On réalise ensuite une gravure peu profonde (par exemple d'environ 20 µm) depuis la face avant de la plaque 60 pour former le siège 63 et rendre traversantes les ouvertures 61 et 62.

Les ouvertures 61 et 62 sont, de préférence, circulaires et les sièges 63 et 65 sont également, de préférence, circulaires en s'inscrivant, le cas échéant, dans des surfaces carrées définies par les deux faces du clapet 35 avec lesquelles ils coopèrent respectivement.

La microvanne représentée à la figure 6 constitue une vanne à trois voies 61, 62 et 64 et deux états (ouvert/fermé). Cette vanne est une vanne normalement fermée dans la mesure où, en l'absence de courant dans la bobine, le clapet 35 obture l'ouverture d'entrée 61. La vanne est de plus à commande directe, l'actionneur agissant directement sur le clapet 35.

Pour réaliser une vanne normalement ouverte, il suffit que l'ouverture 64 constitue l'entrée du fluide, que l'ouverture 62 constitue la sortie du fluide et que l'ouverture 61 constitue l'échappement.

On peut également réaliser une fonction de commutateur entre deux sorties de fluide, l'ouverture 62 constitue alors l'entrée du fluide tandis que les ouvertures 61 et 64 constituent les sorties.

On peut en outre réaliser une vanne à deux voies et deux états, normalement fermée, en ne réalisant pas ou en bouchant à demeure l'ouverture 64. Pour réaliser une vanne à deux voies et deux états, normalement ouverte, on ne réalise pas l'ouverture 61.

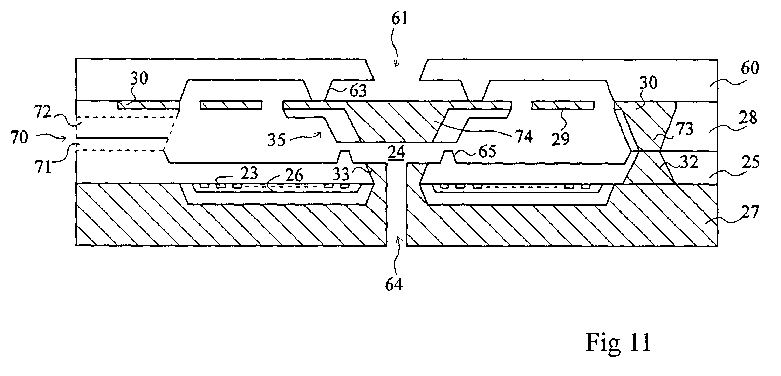

La figure 11 représente, en coupe transversale, un deuxième mode de réalisation d'une microvanne électromagnétique selon l'invention. La réalisation d'une telle microvanne fait appel aux mêmes techniques de gravure que celles exposées en relation avec les figures précédentes.

Ce mode de réalisation diffère du mode de réalisation exposé en relation avec la figure 6, notamment par la présence d'une ouverture latérale 70 de passage du fluide et par le fait que, pour ce faire, les bras de suspension 29 du clapet 35 sont formés sur la face de la deuxième plaque 28 qui est en regard de la troisième plaque 60.

La première plaque 25 sur laquelle est réalisée la bobine 23 est similaire à la plaque 25 du premier mode de réalisation représenté à la figure 7, à l'exception du fait qu'un des passages traversants 32 est interrompu pour permettre la réalisation d'une première partie 71 de l'ouverture 70.

La deuxième plaque 28 de ce mode de réalisation comporte une deuxième partie 72 de l'ouverture latérale 70. Les zones périphériques 30 sont associées à des remplissages traversants 73 permettant d'assurer la continuité du circuit magnétique avec les remplissages 32 de la plaque 25. Un remplissage central 74 définit l'entrefer 24 avec le remplissage central 33 de la plaque 25.

La troisième plaque 60 est similaire à celle représentée aux figures 9A et 9B, à l'exception du fait que seule l'ouverture centrale 61 y est pratiquée.

Le capot magnétique 27 est similaire au capot représenté à la figure 10.

La microvanne représentée à la figure 11 constitue une vanne à trois voies 61, 70 et 64 et deux états (ouvert/fermé). En supposant que l'entrée du fluide est constituée par l'ouverture 61 et que la sortie est constituée par l'ouverture 70, cette vanne est une vanne normalement fermée dans la mesure où, en l'absence de courant dans la bobine, le clapet 35 obture l'ouverture d'entrée 61.

Pour réaliser une vanne normalement ouverte, il suffit que l'ouverture 64 constitue l'entrée du fluide, que l'ouverture 70 constitue la sortie du fluide et que l'ouverture 61 constitue l'échappement.

Pour réaliser une fonction de commutateur entre deux sorties de fluide, l'ouverture 70 constitue l'entrée du fluide tandis que les ouvertures 61 et 64 constituent les sorties.

On peut également réaliser une vanne à deux voies et deux états, normalement fermée, en ne réalisant pas ou en bouchant à demeure l'ouverture 64. Pour réaliser une vanne à deux voies et deux états, normalement ouverte, on ne réalise pas l'ouverture 61.

Bien entendu, la présente invention est susceptible de diverses variantes et modifications qui apparaîtront à l'homme de l'art. En particulier, chacun des constituants décrits pour les couches déposées pourra être remplacé par un ou plusieurs constituants remplissant la même fonction.

De plus, on a décrit précédemment l'invention et ses variantes uniquement dans le cas où les plaques constitutives de la structure sont des plaques de silicium. En effet, c'est pour le silicium que les technologies de microgravure ont été le plus développées. On notera toutefois que, dans la structure décrite, les propriétés semiconductrices du silicium ne sont pas utilisées. On pourrait donc utiliser d'autres matériaux non-magnétiques pour remplacer le silicium, en fonction des propriétés physico-chimiques recherchées (verre, isolant, etc.).

En outre, bien qu'il ait été fait référence dans la description qui précède à un actionneur de forme générale carrée, l'invention permet de réaliser un actionneur de forme générale quelconque, par exemple rectangulaire, circulaire, ovale ou polygonale.

## Revendications

1. Micro-actionneur électromagnétique du type comportant une bobine (23) de création d'un champ magnétique à action sur un ensemble mobile (35) au moins partiellement constitué d'un matériau magnétique (31), comportant un circuit magnétique (20) de canalisation du flux magnétique au niveau d'un entrefer (24) fermable par déplacement dudit ensemble mobile (35), caractérisé en ce qu'il comporte une première plaque (25) sur une première face extérieure de laquelle est formée ladite bobine (23) et dans l'épaisseur de laquelle sont formées des portions transversales (32, 33) du circuit magnétique (20), lesdites portions transversales incluant une portion centrale (33) définissant une extrémité fixe de l'entrefer (24).

2. Micro-actionneur électromagnétique selon la revendication 1, caractérisé en ce qu'il comporte une deuxième plaque (28) à partir de laquelle sont réalisés ledit ensemble mobile (35) et des bras (29) de suspension de cet ensemble mobile à des zones périphériques (30), l'ensemble mobile (35) étant en regard de ladite portion centrale (33) de la première plaque (25) avec laquelle il définit l'entrefer (24), l'ensemble mobile (35) et ses bras de suspension (29) étant au moins partiellement en un matériau magnétique.

3. Micro-actionneur électromagnétique selon la revendication 2, caractérisé en ce que lesdits bras de suspension (29) sont exclusivement en matériau magnétique.

4. Micro-actionneur électromagnétique selon la revendication 2 ou 3, caractérisé en ce que ledit ensemble mobile (35) est relié à ladite portion centrale (33) de la première plaque (25) par un circuit magnétique continu incluant les bras de suspension (29), les autres portions transversales (32) de la première plaque (25) et un capot magnétique (27) reposant sur ladite première face de la première plaque (25).

5. Micro-actionneur électromagnétique selon l'une quelconque des revendications 1 à 4, caractérisé en ce que ledit ensemble mobile (35) constitue un clapet d'obturation d'au moins un passage (61, 64, 70) d'un fluide pour constituer une microvanne électromagnétique.

6. Micro-actionneur électromagnétique selon la revendication 5, caractérisé en ce que ledit passage est constitué d'une ouverture transversale (61) réalisée dans une troisième plaque (60) et débouchant au droit dudit clapet (35).

7. Micro-actionneur électromagnétique selon la revendication 5 ou 6, caractérisé en ce qu'il comporte en outre une ouverture d'échappement (64) débouchant dans ledit entrefer (24) depuis ladite première plaque (25), ladite ouverture d'échappement (64) étant propre à être obturée par ledit clapet (35).

8. Procédé de réalisation d'un micro-actionneur électromagnétique du type comportant une bobine (23) de création d'un champ magnétique à action sur un ensemble mobile (35) au moins partiellement constituée d'un matériau magnétique (31), caractérisé en ce qu'il comprend les étapes suivantes :
- creuser, à partir d'une première face d'une première plaque (25), trois évidements (43, 44) de définition de passages transversaux d'un circuit magnétique (20) ; un évidement central (44) présentant une profondeur inférieure à celle des deux autres évidements (43) ;
- remplir lesdits évidements (43, 44) d'un matériau magnétique et former, sur ladite première face, une bobine (23) par un enroulement plan de spires autour de l'évidement central (44) ;
- graver la face opposée à ladite bobine (23) de manière à rendre traversants lesdits remplissages (32, 33) des évidements (43, 44) en formant un épaulement (34) autour et à distance dudit évidement central (44) ;
- former, dans un matériau magnétique déposé sur une deuxième plaque (28) et sur une surface équivalente à la surface dans laquelle s'inscrivent, dans la première plaque (25), lesdits remplissages de matériau magnétique (32, 33), une zone centrale (31) suspendue par des bras (29) à une zone périphérique (30) ;
- empiler lesdites plaques (25, 28) en alignant ledit remplissage central (33) de la première plaque (25) avec ladite zone centrale (31) de la deuxième plaque (28), pour définir un entrefer (24) dont une extrémité mobile est définie par ladite zone centrale (31) de la deuxième plaque (28) et dont une extrémité fixe est constituée par ledit remplissage central (33) de la première plaque (25) ; et
- rapporter, sur ladite première face de la première plaque (25), un capot magnétique (27) faisant contact avec lesdits remplissages (32, 33).

9. Procédé de réalisation d'un micro-actionneur électromagnétique selon la revendication 8, caractérisé en ce que lesdites plaques (25, 28) sont en silicium, et en ce que ledit matériau magnétique est un ferro-nickel.

## Claims

1. An electromagnetic micro-actuator comprising a coil (23) for generating a magnetic field which acts on a movable element (35) at least partially made of a magnetic material (31), comprising a magnetic circuit (20) to drive the magnetic flux to a gap (24) closable by the motion of the movable element (35), characterized in that it includes a first plate (25) on a first external surface of which is formed the coil (23) and in the thickness of which are formed transverse portions (32, 33) of the magnetic circuit (20), said transverse portions including a central portion (33) defining a fixed end of the gap (24).

2. The electromagnetic micro-actuator of claim 1, characterized in that it includes a second plate (28) from which are formed the movable element (35) and arms (29) for hanging the movable element to peripheral areas (30), wherein the movable element (35) faces the central portion (33) of the first plate (25) with which it defines the gap (24), the movable element (35) and its hanging arms (29) being at least partially made of a magnetic material.

3. The electromagnetic micro-actuator of claim 2, characterized in that said hanging arms (29) are exclusively made of a magnetic material.

4. The electromagnetic micro-actuator of claim 2 or 3, characterized in that said movable element (35) is connected to the central portion (33) of the first plate (25) by a continuous magnetic circuit including the hanging arms (29), the other transverse portions (32) of the first plate (25) and a magnetic cover (27) abutting against the first surface of the first plate (25).

5. The electromagnetic micro-actuator of any of claims 1 to 4, characterized in that said movable element (35) constitutes a flap closing at least one passageway (61, 64, 70) of a fluid to form an electromagnetic microvalve.

6. The electromagnetic micro-actuator of claim 5, characterized in that said passageway is constituted by a transverse aperture (61) formed in a third plate (60) and leading in front of said flap (35).

7. The electromagnetic micro-actuator of claim 5 or 6, characterized in that it further includes an exhaust aperture (64) leading to said gap (24) from said first plate (25), said exhaust aperture (64) being adapted to be closed by said flap (35).

8. A method for fabricating an electromagnetic micro-actuator including a coil (23) for generating a magnetic field that acts on a movable element (35) at least partially made of a magnetic material (31), characterized in that it comprises the following steps:
- etching out, from a first surface of a first plate (25), three recesses (43, 44) for defining transverse passageways of a magnetic circuit (20), a central recess (44) being shallower than the two other recesses (43);
- filling the recesses (43, 44) with a magnetic material and forming, on said first surface, a coil (23) by a plane winding about the central recess (44);
- etching out the surface opposite to said coil (23) so that said magnetic material filling (32, 33) said recesses (43, 44) appears on the opposite surface while forming a shoulder (34) about and apart from said central recess (44);
- forming, in a magnetic material deposited on a second plate (28) and on a surface area equivalent to the surface area in which are included, in the first plate (25), said magnetic material fillings (32, 33), a central portion (31) suspended by arms (29) to a peripheral area (30);
- piling said plates (25, 28) by aligning said central filling (33) of the first plate (25) with said central portion (31) of the second plate (28), to define a gap (24) having a movable end defined by said central portion (31) of the second plate (28) and a fixed end constituted by said central filling (33) of the first plate (25); and
- assembling, over said first surface of the first plate (25), a magnetic cover (27) contacting the fillings (32, 33).

9. The method of claim 8, characterized in that said plates (25, 28) are made of silicon and wherein said magnetic material is made of ferro-nickel.

## Patentansprüche

1. Elektromagnetischer Mikrosteller, mit einer Spule (23) zum Erzeugen eines Magnetfeldes, das auf eine bewegliche, zumindest teilweise aus einem magnetischen Material (31) bestehende Anordnung (35) wirkt, mit einem magnetischen Kreis (20) zum Leiten des magnetischen Flusses auf das Niveau eines Luftspaltes (24), der durch die Verschiebung der beweglichen Anordnung (35) verschließbar ist, dadurch gekennzeichnet, dass er eine erste Scheibe (25) aufweist, auf deren einer ersten äußeren Oberfläche die Spule (23) ausgebildet ist und in deren Dicke transversale Bereiche (32,33) des magnetischen Kreises (20) ausgebildet sind, wobei diese transversalen Bereiche einen zentralen Bereich (33) umfassen, der eine feste Seite des Luftspaltes (24) begrenzt.

2. Elektromagnetischer Mikrosteller nach Anspruch 1, dadurch gekennzeichnet, dass er eine zweite Scheibe (28) aufweist, aus der die bewegliche Anordnung (35) und Arme (29) zum Aufhängen der beweglichen Anordnung an peripheren Zonen (30) realisiert sind, wobei die bewegliche Anordnung (35) gegenüber dem zentralen Bereich (33) der ersten Scheibe (25) liegt, mit dem sie den Luftspalt (24) begrenzt, wobei die bewegliche Anordnung (35) und deren Aufhängearme (29) zumindest teilweise aus einem magnetischen Material sind.

3. Elektromagnetische Mikrosteller, nach Anspruch 2, dadurch gekennzeichnet, dass die Aufhängearme (29) ausschließlich aus magnetischem Material sind.

4. Elektromagnetischer Mikrosteller nach Anspruch 2 oder 3, dadurch gekennzeichnet, dass die bewegliche Anordnung (35) mit dem zentralen Bereich (33) der ersten Scheibe (25) über einen ununterbrochenen magnetischen Kreis verbunden ist, der die Aufhängearme (29), die übrigen transversalen Bereiche(32) der ersten Scheibe (25) und ein Magnetjoch (27) einschließt, welches auf der ersten Oberfläche der ersten Scheibe (25) ruht.

5. Elektromagnetischer Mikrosteller nach einem der Ansprüche 1 bis 4, dadurch gekennzeichnet, dass die bewegliche Anordnung (35) einen Ventilkörper zum Absperren zumindest einer Passage (61,64,70) für eine Flüssigkeit bildet, um ein elektromagnetisches Mikroventil zu bilden.

6. Elektromagnetischer Mikrosteller nach Anspruch 5, dadurch gekennzeichnet, dass die Passage durch eine transversale Öffnung (61) gebildet ist, die in einer dritten Scheibe (60) realisiert ist und am Ort des Ventilkörpers (35) eine Mündung aufweist.

7. Elekrtomagnetischer Mikrosteller nach Anspruch 5 oder 6, dadurch gekennzeichnet, dass er ferner eine Ausgangsöffnung (64) aufweist, die in den Luftspalt (24) von Seiten der ersten Scheibe (25) aus mündet, wobei die Ausgangsöffnung (64) durch den Ventilkörper (35) verschließbar ist.

8. Verfahren zum Herstellen eines elektromagnetischen Mikrostellers mit einer Spule (23) zum Erzeugen eines Magnetfeldes, das auf eine bewegliche, zumindest teilweise aus einem magnetischen Material (21) bestehende Anordnung (35) wirkt, dadurch gekennzeichnet, dass es die folgenden Schritte aufweist:
- Aushöhlen, ausgehend von einer ersten Oberfläche einer ersten Scheibe (25), von drei Ausnehmungen (43,44) zum Begrenzen von transversalen Passagen eines magnetischen Kreises (20); wobei eine zentral Ausnehmung (44) eine geringere Tiefe als die beiden anderen Ausnehmungen (43) aufweist;
- Füllen der Ausnehmungen (43,44) mit einem magnetischen Material und Formen einer Spule (23) auf dieser ersten Oberfläche durch eine ebene Wicklung von Windungen um die zentrale Ausnehmung (44);
- Ätzen der der Spule (23) gegenüber liegenden Seite, um an die Füllungen (32,33) der Ausnehmungen (43,44) zu gelangen und eine Schulter (34) um die und im Abstand von der zentralen Ausnehmung (44) zu formen;
- Formen in einem magnetischen Material, das auf einer zweiten Scheibe (28) über eine Fläche abgelegt ist, die äquivalent der Fläche ist, in der in der ersten Scheibe (25) die Füllungen (32,33) aus magnetischem Material abgelegt sind, einer zentralen Zone(31), die durch Arme (29) an einer peripheren Zone (30) aufgehängt ist;
- Stapeln der Scheiben (25,28), wobei die zentrale Füllung (33) der ersten Scheibe (25) mit der zentralen Zone (31) der zweiten Scheibe (28) ausgerichtet wird, um einen Luftspalt (24) zu begrenzen, dessen eine bewegliche Seite definiert ist durch die zentrale Zone (31) der zweiten Scheibe (28) und dessen feste Seite durch die zentrale Füllung (33) der ersten Scheibe (25) gebildet ist, und
- Anordnen eines Magnetjoches (27) auf der ersten Oberfläche der ersten Scheibe (25), das mit den Füllungen (32,33) in Kontakt steht.

9. Verfahren zum Herstellen eines elektromagnetischen Mikro stellers nach Anspruch 8, dadurch gekennzeichnet, dass die Scheiben (25,28) aus Silizium sind und dass das magnetische Material Ferro-Nickel ist.
